# EUROPÄISCHE PATENTSCHRIFT

(11) **EP 2 064 518 B1**
(45) Veröffentlichungstag und Bekanntmachung des Hinweises auf die Patenterteilung: **09.10.2019**
(21) Anmeldenummer: 07802895.8
(22) Anmeldetag: 27.08.2007
(51) Int. Cl.: G01B 11/275

(54) **VERFAHREN ZUM BESTIMMEN VON ABSTÄNDEN ZUR FAHRWERKSVERMESSUNG EINES KRAFTFAHRZEUGS**
METHOD FOR DETERMINING DISTANCES FOR MEASURING THE CHASSIS OF A MOTOR VEHICLE
PROCÉDÉ POUR LA DÉTERMINATION DES DISTANCES EN VUE DE LA MESURE DU TRAIN DE ROULEMENT D'UN VÉHICULE AUTOMOBILE

(30) Priorität: 08.09.2006 DE 102006042309
(43) Veröffentlichungstag der Anmeldung: 03.06.2009
(73) Patentinhaber: Beissbarth GmbH, 80993 München (DE)
(72) Erfinder: BUX, Hermann, 86559 Adelzhausen (DE); SCHOMMER, Stefan, 85716 Unterschleissheim (DE)
(74) Vertreter: Schmitt-Nilson Schraud Waibel Wohlfrom Patentanwälte Partnerschaft mbB
(86) Internationale Anmeldenummer: PCT/EP2007/058854
(87) Internationale Veröffentlichungsnummer: WO 2008/028832

(56) Entgegenhaltungen:
- EP-A- 0 803 703
- EP-A- 0 895 056
- WO-A-01/38843
- WO-A-02/31437
- WO-A-98/36381
- WO-A-2006/074026
- DE-A1-102004 013 441

## Beschreibung

Die vorliegende Erfindung betrifft ein Verfahren sowie ein Messgerät zum Bestimmen von Abständen zur Fahrwerksvermessung eines Kraftfahrzeugs, insbesondere zum Bestimmen eines Höhenstandes oder eines Felgendurchmessers, sowie ein Messgerät, eine Fahrwerksvermessungseinrichtung und eine Prüfstraße für Kraftfahrzeuge hiermit.

Die berührungslose Achsvermessung, wie sie bspw. aus der DE 10 2004 013 441 bekannt ist, basiert auf der Erkennung eines Radfelgengeometriedetails und dessen Auswertung bzgl. der Lage im Raum und der Zusammenführung der Ergebnisse zu einer Achsvermessung.

Neben den reinen Messwerten, welche die Stellung der Radfelgen zueinander beschreiben, sind für eine Auswertung bzw. für einen Soll-/Istvergleich fahrzeugspezifische Vorgabewerte erforderlich, bspw. die Konstruktionslage oder ein zulässiger Bereich des Höhenstandes, der vom Fahrzeughersteller vorgegeben wird. Der Höhenstand wird dabei von verschiedenen Fahrzeugherstellern unterschiedlich definiert. Gemäß einer Definition wird der Höhenstand als Höhendifferenz zwischen der Radhausoberkante und der Felgenoberkante definiert. Andere Definitionen betrachten bspw. das Niveau an einem Element der Aufhängung oder die Differenz zwischen der Aufstandfläche und einem Karosseriemerkmal oder auch allgemein die Felge. Voraussichtlich werden in Zukunft noch andere Abstände und Höhenstände von den Kraftfahrzeugherstellern definiert werden. Dabei ergibt sich in der Praxis oft das Problem, dass diese Punkte zumindest teilweise nicht sichtbar sind.

Abhängig von unterschiedlichen Beladungszuständen eines Kraftfahrzeugs ergibt sich ein unterschiedlicher Höhenstand und somit auch ein unterschiedlicher Einfederweg für ein und denselben Kraftfahrzeugtyp. Basierend auf unterschiedlichen Einfederwegen ergeben sich selbst bei ein und demselben Kraftfahrzeug unterschiedliche Ergebnisse der Fahrwerksvermessung, bspw. unterschiedliche Spur- und Sturzwerte.

Bisher wird der Höhenstand eines Kraftfahrzeugs unter Zuhilfenahme mechanischer Hilfsmittel vermessen, indem Abstände von festgelegten Punkten am Fahrzeug und/der Aufstandsfläche vermessen werden, und die gemessenen Werte werden von Hand protokolliert bzw. in einen Rechner der Fahrwerksvermessungseinrichtung eingegeben oder mit einem Sonderwerkzeug gemessen und über eine serielle Schnittstelle dem Rechner zur Verfügung gestellt.

Dies ist umständlich und langwierig. Zudem wird eine genaue Vermessung dadurch erschwert, dass für die Vermessung notwendige Punkte häufig nicht oder nur schwierig direkt angetastet werden können. Das Dokument WO-A-01/38843 offenbart ein Verfahren zur Bestimmung des dynamischen Verhaltens eines Fahrzeugs.

Es ist daher Aufgabe der vorliegenden Erfindung, ein Verfahren zum Bestimmen von Abständen zur Fahrwerksvermessung von Kraftfahrzeugen anzugeben, die schneller, einfacher und benutzerfreundlicher arbeiten.

Diese Aufgabe wird durch den Gegenstand des unabhängigen Patentanspruchs 1 gelöst. Vorteilhafte Weiterbildungen ergeben sich aus den abhängigen Ansprüche.

Bei dem erfindungsgemäßen Verfahren zum Bestimmen von Abständen zur Fahrwerksvermessung eines Kraftfahrzeugs, insbesondere zum Bestimmen eines Höhenstandes oder eines Felgendurchmessers, wird zunächst jeweils ein Bild einer Radfelge und wenigstens eines benachbart zu der Radfelge liegenden Bereichs durch wenigstens zwei Messkameras eines Messgeräts aufgenommen. Bei dem benachbart zu der Radfelge liegenden Bereich kann es sich bspw. um das Radhaus, die Drehplatte, auf der das Rad steht, oder die Bühne oder den Messplatz handeln, auf dem das Kraftfahrzeug vermessen wird. in den beiden aufgenommenen Bildern einer Radfelge wird dann wenigstens ein erster Raumpunkt bestimmt und dessen Position durch Triangulation berechnet. Dies ist dem Fachmann bekannt und braucht hier nicht näher erläutert zu werden. Anschließend wird in den beiden aufgenommenen Bildern wenigstens ein zweiter Raumpunkt bestimmt und dessen Position durch Triangulation berechnet. Danach wird der Abstand oder die Höhendifferenz zwischen den zwei Raumpunkten bestimmt. Aus diesem Abstand oder der Höhendifferenz lässt sich direkt oder indirekt der Höhenstand des Kraftfahrzeugs bestimmen, ohne dass mechanische Hilfsmittel zu Hilfe genommen werden müssen.

Gemäß einem Grundgedanken der Erfindung werden beliebige Bereiche oder Punkte im Bild einer Stereokameraanordnung eines Messkopfes entweder computergesteuert oder benutzerinteraktiv bestimmt, und aus dem automatisch bestimmten Höhenstand lässt sich der passende Parametersatz für den zu vermessenden Fahrzeugtyp automatisch auswählen, ohne dass hierfür eine manuelle Dateneingabe erforderlich ist. Es ist nicht mehr erforderlich, mit mechanischen Hilfsmitteln Abstände von festgelegten Punkten am Fahrzeug und/oder der Aufstandsfläche zu vermessen und der dafür erforderliche Aufwand für das Messen und Protokollieren für jedes Rad kann eingespart werden. Des weiteren können Punkte und Ebenen einer Radfelge bzw. eines benachbart zu der Radfelge liegenden Bereiches ausgewählt und vermessen werden, die ansonsten nicht oder nur schwierig manuell angetastet werden können. Dadurch wird die Benutzerfreundlichkeit erhöht, die zum Bestimmen von Abständen erforderliche Zeit verringert, das Verfahren somit beschleunigt und die Ergebnisse der darauffolgenden Vermessung des Fahrwerks des Kraftfahrzeugs werden verbessert.

Durch das erfindungsgemäße Verfahren wird es ermöglicht, auch Geometriedetails außerhalb der Radfelge festzulegen und deren räumliche Position zum Messkopf oder Messgerät zu bestimmen, selbst wenn deren Form zuvor nicht genau bekannt ist, wie bspw. Bohrungen in der Drehplatte oder Schrauben in Radkästen etc. Damit ermöglicht es das erfindungsgemäße Verfahren, Abstandsmaße zu beliebigen Ebenen zu bestimmen.

Für die Abstandsvermessung eignen sich bspw. Geometriedetails auf der Radfelge gegenüber einem beliebigen Raumpunkt.

In einer ersten Ausführungsform der Erfindung liegt einer der bestimmten Raumpunkte auf dem Felgenhorn bzw. auf einer Felgenkante, insbesondere auf der Felgenoberkante oder auf der Felgenunterkante. Das Felgenhorn bildet nämlich ein üblicherweise zur Vermessung der Radstellungsdaten herangezogenes Element. Wenn die Radfelge, insbesondere deren Felgenhorntorus bspw. durch das in der DE 10 2004 013 441 offenbarte Vermessungsverfahren automatisch erkannt wird, kann auch der auf diesem Torus liegende höchste Punkt der Felgenoberkante oder der tiefste Punkt der Felgenunterkante automatisch bestimmt werden. Somit kann der Abstand zwischen Felgenober- bzw. -unterkante und einem beliebigen Raumpunkt, der vorzugsweise auf der Fahrzeugkarosserie liegt, automatisch bestimmt werden, und daraus lässt sich der Höhenstand ableiten.

Gemäß einer weiteren Ausführungsform der Erfindung ist einer der beiden bestimmten Raumpunkte das Felgenzentrum, das nahezu identisch mit der Raddrehachse ist, die bspw. aus der Achsvermessung bekannt ist. Gemäß dem in der DE 10 2004 013 441 offenbarten Verfahren lässt sich aus einem bestimmten Radfelgentorus der Felgenmittelpunkt bzw. das Felgenzentrum ermitteln, Demgemäß lässt sich der Abstand dieses Felgenzentrums zu einem beliebigen Raumpunkt, der vorzugsweise auf der Fahrzeugkarosserie gelegen ist, automatisch bestimmen und der Höhenstand des Kraftfahrzeugs ableiten.

In einer weiteren Ausführungsform der Erfindung liegt einer der bestimmten Raumpunkte auf einer Radhauskante, insbesondere auf der Radhausoberkante. Dadurch lässt sich der Abstand zwischen der Radhauskante und einem beliebigen Raumpunkt, der bspw. auf der Felge oder auf dem Messplatz liegt, automatisch bestimmen.

In einer weiteren Ausführungsform der Erfindung ist einer der beiden bestimmten Raumpunkte in dem Radhaus oder zumindest im Bildbereich angeordnet, bspw. eine Schraube in dem Radhaus, wodurch sich der Abstand zwischen diesem Raumpunkt und einem auf der Felge oder auf dem Messplatz angeordneten Raumpunkt bestimmen lässt.

In einer weiteren Ausführungsform der Erfindung ist an der Radfelge oder an dem Radhaus ein Messtarget bzw. eine Marke angeordnet und einer der beiden bestimmten Raumpunkte liegt auf diesem Messtarget, insbesondere auf dessen Ober- oder Unterkante. Somit kann der Abstand zwischen diesem Messtarget und einem weiteren beliebigen Raumpunkt bestimmt werden.

Ebenso kann ein weiteres Messtarget an der Radfelge oder an dem Radhaus angeordnet sein, auf dem, insbesondere auf dessen Unterkante oder Oberkante, der weitere Raumpunkt liegt. Somit kann der Abstand zwischen den beiden Messtargets bzw. zwischen den beiden Marken automatisch ermittelt werden.

Gemäß einer weiteren Ausführungsform der Erfindung ist einer der beiden bestimmten Raumpunkte auf der Drehplatte einer Fahrwerksvermessungseinrichtung oder einer Kraftfahrzeugprüfstraße angeordnet, und ist bspw. eine Bohrung in der Drehplatte. Somit kann der Abstand zwischen Drehplatte und einem beliebigen, vorzugsweise auf der Karosserie des Kraftfahrzeugs, angeordneten Raumpunkt bestimmt und daraus der Höhenstand des Kraftfahrzeugs abgeleitet werden.

In einer weiteren Ausführungsform der Erfindung liegt einer der bestimmten Raumpunkte auf der Bühne einer Fahrwerksvermessungseinrichtung oder einer Kraftfahrzeugprüfstraße, und somit kann der Abstand zwischen der Bühne und einem beliebigen, vorzugsweise auf der Karosserie des Kraftfahrzeugs liegenden Punktes bestimmt und daraus der Höhenstand abgeleitet werden.

In einer weiteren Ausführungsform der Erfindung sind die zwei bestimmten Raumpunkte zwei Punkte auf der Felge, und aus deren Abstand lässt sich der Felgendurchmesser ableiten. Dabei wird zunächst das Felgenhorn bestimmt und daraus der Felgendurchmesser abgeleitet. Einer der beiden Raumpunkte kann das Felgenzentrum und der andere ein auf dem Felgenhorntorus liegender Raumpunkt sein. Ebenso kann einer der beiden bestimmten Raumpunkte auf der Felgenoberkante und der andere bestimmte Raumpunkt auf der Felgenunterkante liegen.

Besonders vorteilhaft ist die Vermessung mehrerer Raumpunkte, die zueinander in Verbindung gesetzt werden können. Dafür wird nach der Bestimmung der zwei Raumpunkte wenigstens ein weiterer Raumpunkt in den beiden aufgenommenen Bildern bestimmt und dessen Position bspw. durch Triangulation bestimmt. Anschließend werden die Abstände zwischen den bestimmten Raumpunkten jeweils paarweise ermittelt.

Um das erfindungsgemäße Verfahren noch weiter zu verbessern, können Hilfslinien, insbesondere horizontale oder vertikale Hilfslinien durch wenigstens einen Raumpunkt gelegt werden, so dass anstelle der Abstände zweier oder mehrerer Raumpunkte nun die Abstände dieser Hilfslinien betrachtet und bestimmt werden können.

Um das optimale Antasten von Maxima und Minima von runden und elliptischen Geometriedetails, insbesondere von Tori zu erleichtern, kann wenigstens eine, insbesondere horizontale oder vertikale, Hilfslinie durch einen auf einer Kante eines derartigen runden oder elliptischen Geometriedetails liegenden Raumpunkt gezogen werden.

In einer noch präziseren Ausführungsform der Erfindung können die Lage und die Form der Hilfslinie um den Betrag der Schrägstellung des Messkopfes aus dem Bezugssystem und um die Verzerrung der Lage der Messkamera, bedingt durch den Blickwinkel, korrigiert werden, wodurch sich die Genauigkeit der ermittelten Abstandsergebnisse noch weiter erhöhen lässt.

Wenn wenigstens ein Bild einer Messkamera eines Messkopfes auf einem Monitor oder einem Bildschirm dargestellt wird, kann dem Benutzer die Gelegenheit zum Verfolgen des erfindungsgemäßen Verfahrens sowie zur Interaktion gegeben werden.

Für manche Anwendungsfälle ist es notwendig, die Bilder beider Stereokameras eines Messkopfes anzuzeigen, damit diese von einem Benutzer gleichzeitig verfolgt und interaktiv bearbeitet werden können.

In einer weiteren vorteilhaften Ausführungsform kann die Auswahl wenigstens eines Raumpunktes in wenigstens einem aufgenommenen Bild einer Messkamera von einem Benutzer erfolgen und zwar über das Anzeigegerät sowie über ein Eingabegerät, bspw. eine Maus oder eine Tastatur. Der Benutzer kann somit eine Auswahl für einen geeigneten Raumpunkt treffen oder einen Bereich hierfür vorgeben. Wenn auf dem Anzeigegerät beide Bilder der Stereokameraanordnung eines Messkopfes angezeigt werden, können korrespondierende Bereiche und Punkte in beiden Bildern schnell und zuverlässig aufgefunden werden. Dadurch können beliebige Raumpunkte sowie der Abstand zwischen beliebigen Raumpunkten vermessen werden, solange diese auf beiden Bildern der Stereokameraanordnung des Messkopfes erkennbar sind.

In einer Variante des Verfahrens erfolgt die Auswahl wenigstens eines Raumpunktes in einem aufgenommenen Bild einer Messkamera durch einen Benutzer, und der gleiche Raumpunkt in dem Bild der anderen Messkamera wird ebenfalls von dem Benutzer bestimmt. In einer anderen Variante des Verfahrens erfolgt die Auswahl wenigstens eines Raumpunktes in einem aufgenommenen Bild einer Messkamera durch einen Benutzer, und der gleiche Raumpunkt in dem Bild der anderen Messkamera wird durch einen Rechner einer Fahrwerksvermessungseinrichtung oder einer Kraftfahrzeugprüfstraße automatisch bestimmt. Dies setzt den Einsatz einer geeigneten, dem Fachmann bekannten Bildverarbeitungssoftware voraus, die anhand der Auswahl des Raumpunktes in dem einen Bild der Messkamera den gleichen Raumpunkt im anderen Bild der Messkamera bestimmen kann.

Somit wird in nur einem der beiden Bilder die Markierung vorgenommen und das System bestimmt automatisch einen Vorschlag des korrelierenden Punktes in dem anderen Bild. Dieser Vorschlag kann ggf. verändert werden.

In einer weiteren Verfahrensvariante erfolgt die Auswahl des oder der Raumpunkte computergesteuert durch einen Rechner einer Fahrwerksvermessungseinrichtung oder einer Kraftfahrzeugprüfstraße, und zwar anhand von vorgebbaren Kriterien. Bei diesen Kriterien kann es sich bspw. um in einer Fahrzeugdatenbank gespeicherte Fahrzeugsolldaten, bspw. die Konstruktionslage, den Höhenstand, erforderliche Abstände, spezifische Raumpunkte sowie im Vorfeld festgelegte Geometriedetails und Modelle für jeden Fahrzeugtyp, sowie um messplatzspezifische Daten, bspw. Bohrungen in der Drehplatte oder spezifische Punkte des Messplatzes handeln. Wenn die Bildverarbeitungssoftware des Rechners der Fahrwerksvermessungseinrichtung oder einer Kraftfahrzeugprüfstraße in den Bildern der Messkameras Punkte ermittelt, die diesen Kriterien entsprechen, können diese Punkte automatisch ausgewählt und die gewünschten Positions- und Abstandsdaten automatisch bestimmt werden.

In einer vorteilhaften Weiterbildung dieser Verfahrensvariante können die bestimmten Raumpunkte einem Geometriemerkmal, bspw. dem Felgenhorn, zugeordnet werden, so dass ein dreidimensionales Modell entsteht.

Die bestimmten Raumpunkte und deren Positionen sowie das ermittelte Geometriemerkmal und/oder das dreidimensionale Modell können anschließend abgespeichert werden, so dass diese Daten für eine Auswertung und für zukünftige Messungen zur Verfügung stehen.

Wird eine Vielzahl von Punkten einem Geometriemerkmal zugewiesen, so kann das auf diese Weise entstehende dreidimensionale Modell abgespeichert werden. Vorteilhaft ist dabei die automatische Erkennung einfacher, dreidimensionaler Modelle und die maßliche Anpassung geometrischer Hauptmaße, wie bspw. die Kantenlänge oder der Durchmesser durch den Benutzer vor dem Abspeichern des Modells, Zu einem späteren Zeitpunkt kann dieses dreidimensionale Modell in anderen Bildpaaren gesucht und automatisch zur Vermessung herangezogen werden. Vorteilhafterweise kann noch ein Referenzpunkt in diesem Modell festgelegt werden.

Ein Messgerät zum Bestimmen von Abständen zur Fahrwerksvermessung eines Kraftfahrzeugs wird auch beschrieben, insbesondere zum Bestimmen eines Höhenstandes oder eines Felgendurchmessers. Dabei umfasst das Messgerät wenigstens zwei in einem Winkel zueinander auf eine gegenüberliegende Radfelge gerichtete Messkameras, die in der Lage sind, jeweils ein Bild einer Radfelge und wenigstens eines Bereiches benachbart zu der Radfelge, bspw. dem Radhaus, der Drehplatte oder der Bühne aufzunehmen. Dabei ist ein Rechner vorgesehen, der programmiert ist, um die Verfahrensschritte des Verfahrens zum Bestimmen von Abständen zur Fahrwerksvermessung eines Kraftfahrzeugs der oben beschriebenen Art durchzuführen oder zu steuern.

Eine Kraftfahrzeug-Prüfstraße umfasst einen Fahrwerkstester sowie einen Bremsenprüfstand und normalerweise noch eine Spurplatte, die bei der Kraftfahrzeugprüfstrasse jedoch vorteilhafterweise entfallen kann. In Prüforganisationen ist die Kraftfahrzeug-Prüfstraße oft noch um einen Gelenkspieltester erweitert, der wiederum in einer Grube oder einer Hebebühne integriert ist. In manchen Fällen ist die Kraftfahrzeug-Prüfstraße noch um einen Abgastester und um ein Scheinwerfereinstellgerät erweitert.

Die Fahrwerksvermessungseinrichtung/Prüfstraße für Kraftfahrzeuge umfasst wenigstens zwei, vorzugsweise vier, Messgeräte zum Bestimmen von Abständen eines Fahrwerks eines Kraftfahrzeugs, deren relativen Positionen zueinander bestimmt sind und die jeweils über zwei in einem Winkel auf eine gegenüberliegende Radfelge gerichtete Messkameras verfügen, die in der Lage sind, jeweils ein Bild einer Radfelge und wenigstens eines Bereiches benachbart zu der Radfelge, bspw. Radhaus, Drehplatte oder Bühne, aufzunehmen. Des weiteren umfasst eine derartige Fahrwerksvermessungeinrichtung/Prüfstraße für Kraftfahrzeuge einen Rechner, der programmiert ist, um die Verfahrensschritte des Verfahrens zum Bestimmen von Abständen zur Fahrwerksvermessung eines Kraftfahrzeugs der oben beschriebenen Art durchzuführen oder zu steuern, sowie eine Anzeige-/Ausgabeeinrichtung, die in der Lage ist, die durch die Messkameras aufgenommenen Bilder und/oder die darin bestimmten Raumpunkte und/oder das darin ermittelte Geometriemerkmal und/oder das dreidimensionale Modell auszugeben oder anzuzeigen. Durch eine derartige Fahrwerksvermessungseinrichtung/Prüfstraße für Kraftfahrzeuge können die für die nachfolgende Vermessung und Auswertung erforderlichen Abstände, Höhenstände und Felgendurchmesser automatisch und berührungslos vermessen werden. Der bislang erforderliche Vorgang aus manuellem Messen und Protokollieren der Abstände für jedes Rad durch einen Benutzer kann entfallen, wodurch die Vermessung vereinfacht, beschleunigt und verbessert wird.

In einer Ausführungsform der Fahrwerksvermessungseinrichtung/Prüfstraße verfügt der Rechner über eine Datenbank, in der Fahrzeugsolldaten, bspw. die Konstruktionslage, der Höhenstand, zuvor ermittelte Geometriedetails und Modelle, sowie spezifische Raumpunkte für jeden Fahrzeugtyp und/oder messplatzspezifische Daten, bspw. Bohrungen in der Drehplatte, sowie spezifische Messplatzpunkte gespeichert sind. Dadurch ist gewährleistet, dass die Fahrwerksvermessungseinrichtung/Prüfstraße die Abstands- und Höhenstandsmessungen weitgehend automatisiert vornimmt und die ermittelten Daten gleich gespeichert und weiterverarbeitet werden können.

Das erfindungsgemäße Verfahren zum Bestimmen von Abständen zur Fahrwerksvermessung eines Kraftfahrzeugs, insbesondere zum Bestimmen eines Höhenstandes oder eines Felgendurchmessers, kann in einer Ausführungsform auch als Interaktion mit dem Benutzer zum virtuellen Messen von Abständen und Höhenständen bei einer berührungslosen Achsvermessung oder auch als virtuelles Maßband für die Achsvermessung bezeichnet werden.

Folgende unterschiedliche Messsituationen können von dem erfindungsgemäßen Verfahren bewältigt werden:
Punkt-zu-Punkt-Messung (allgemein - Raumpunkte), Felgenunterkante (automatisch) zu Punkt (manuell), Felgenoberkante (automatisch) zu Punkt (manuell), Felgenzentrum (automatisch) zu Punkt (manuell), Marke (automatisch) zu Punkt (manuell), Marke (automatisch) zu Marke (manuell), Targetunterkante (automatisch) zu Punkt (manuell), sowie Targetoberkante (automatisch) zu Punkt (manuell),

Die Erfindung ist nachfolgend anhand eines Ausführungsbeispiels mit Bezug auf die beiliegenden Figuren näher erläutert.
- Figur 1: zeigt eine schematische, perspektivische Ansicht eines Messplatzes mit einem darauf stehenden Kraftfahrzeug; und
- Figur 2: zeigt ein von der ersten Messkamera des ersten Messgeräts aufgenommenes Bild der vorderen linken Radfelge und des vorderen linken Radhauses sowie eines Abschnitts der linken Aufstandsfläche und des vorderen linken Drehtellers.

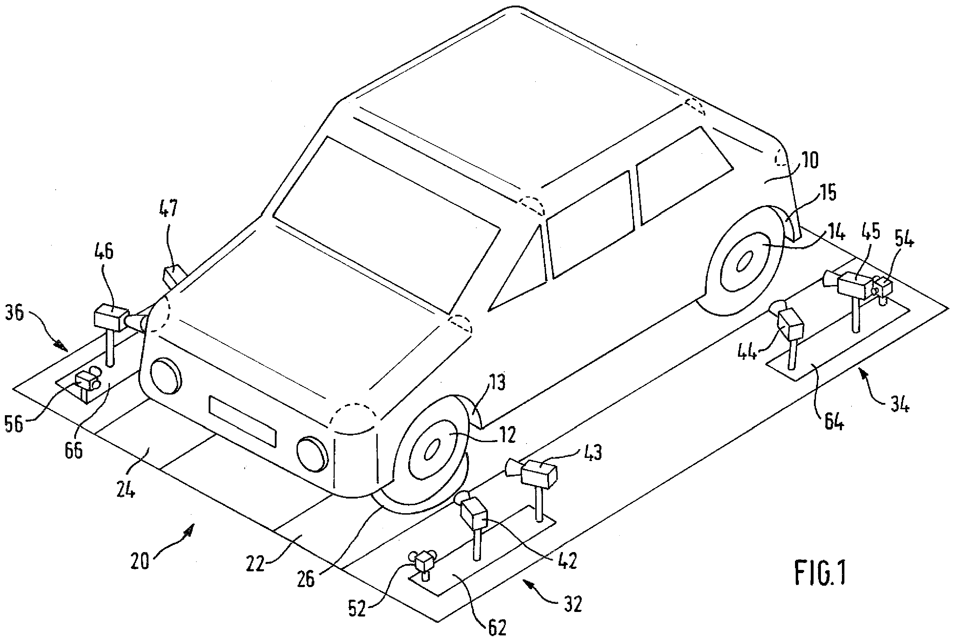

Figur 1 zeigt eine schematische, perspektivische Ansicht eines Messplatzes 20 mit einem auf dem Messplatz 20 stehenden Kraftfahrzeug 10.

Das Kraftfahrzeug 10 ist auf dem Messplatz 20 zur Vermessung seines Fahrwerks angeordnet. Das Kraftfahrzeug 10 verfügt über eine vordere linke Radfelge 12, über eine hintere linke Radfelge 14, die in der perspektivischen Ansicht von Figur 1 gut zu erkennen sind, sowie über eine vordere rechte Radfelge 16 und über eine hintere rechte Radfelge 18, die in der Abbildung gemäß Figur 1 von der Karosserie des Kraftfahrzeugs 10 verdeckt sind.

In Figur 1 ist ebenfalls das vordere linke Radhaus 13 und das hintere linke Radhaus 15 des Kraftfahrzeugs 10 zu erkennen, in denen die Radfelgen 12 und 14 angeordnet sind. Das vordere rechte Radhaus 17 und das hintere rechte Radhaus 19, in denen die Radfelgen 16 und 18 angeordnet sind, sind in Figur 1 durch die Karosserie des Kraftfahrzeugs 10 verdeckt.

Auf dem Messplatz 20 sind vier Messgeräte 32, 34, 36 und 38 längsverschieblich bzgl. der Längsachse des Kraftfahrzeugs 10 angeordnet. Von diesen Messgeräten 32, 34, 36 und 38 sind in Figur 1 das vordere linke Messgerät 32, das hintere linke Messgerät 34 und das vordere rechte Messgerät 36 zu erkennen, während das hintere rechte Messgerät 38 von dem Kraftfahrzeug 10 verdeckt ist. Die Messgeräte 32, 34, 36 und 38 verfügen über entlang der Längsachse des Kraftfahrzeugs 10 verschiebbare Grundplatten 62, 64, 66 und 68. Auf diesen Grundplatten 62, 64, 66 und 68 sind jeweils zwei Messkameras 42, 43; 44, 45; 46, 47 und 48, 49 angeordnet, die unter unterschiedlichen Winkeln auf die jeweils gegenüberliegende Radfelge 12, 14, 16 und 18 gerichtet sind. Jeweils zwei der Messkameras 42, 43; 44, 45; 46, 47 und 48, 49 bilden einen gemeinsamen Messkopf.

Der Messplatz 20 weist zwei längliche Aufstandsflächen 22, 24 mit Dreh- und Schiebeplatten auf. Diese länglichen Aufstandsflächen 22, 24 sind bei Hebebühnen als Fahrschienen und bei Gruben als Auffahrbereiche ausgebildet. In dem vorderem Bereich der Aufstandsflächen 22, 24 ist jeweils ein Drehteller 26 (in Figur 1 zu erkennen) und 28 (in Figur 1 von dem Kraftfahrzeug 10 verdeckt) angeordnet, um Messungen zu ermöglichen, bei denen die vorderen Radfelgen 12 und 16 eingeschlagen werden müssen.

Diese Drehteller 26 und 28 sind ebenfalls entlang der Längsachse des Kraftfahrzeugs 10 bzw. entlang den Aufstandsflächen 22, 24 längsverschieblich, um so den Messplatz 20 auf Kraftfahrzeuge 10 mit unterschiedlichen Radständen einstellen zu können.

Auf den verschiebbaren Grundplatten 62, 64, 66 und 68 der Messgeräte 32, 34, 36 und 38 sind weiterhin Bezugsystem-Messköpfe 52, 54, 56 (in Figur 1 gut zu erkennen) sowie 58 (in Figur 1 verdeckt) angeordnet, die eine optische Vermessung der relativen Winkellagen und der Abstände der Messgeräte 32, 34, 36 und 38 zueinander gestatten. Dazu hat jeder Bezugsystem-Messkopf 52, 54, 56 und 58 zwei in Figur 1 nicht im Detail gezeigte Sende-/Empfangseinheiten, die zu dem jeweils in Längs- und Querrichtung des Kraftfahrzeugs 10 gegenüberliegenden Bezugsystem-Messkopf 52, 54, 56 und 58 ausgerichtet sind. Mit einem derartigen Bezugsystem genügt eine grob justierte Aufstellung der Messgeräte 32, 34, 36 und 38 für eine genaue Bestimmung der relativen Lagen und der Abstände der Messgeräte 32, 34, 36 und 38 zueinander. Diese können laufend gemessen und auch nachjustiert werden. Die Funktion eines derartigen Messplatzes 20 ist dem Fachmann bspw. aus der DE 10 2004 013 441 A1 bekannt.

Die Bezugsystem-Messköpfe 52, 54, 56 und 58 sind in Figur 1 nahe den Ecken des Messplatzes 20 angeordnet, so dass zwischen dem vorderen linken Bezugsystem-Messkopf 52 und dem vorderen rechten Bezugsystem-Messkopf 56 ein Sichtkontakt vor den vorderen Radfelgen 12 und 16 des Kraftfahrzeugs 10 besteht, und die hinteren Bezugsystem-Messköpfe 54 und 58 stehen in Sichtkontakt hinter den hinteren Radfelgen 14 und 18 des Kraftfahrzeugs 10.

Die Messgeräte 32, 34, 36 und 38 sind mit einer in Figur 1 nicht gezeigten Datenverarbeitungseinheit, insbesondere einem Werkstattrechner verbunden, der die von den Messgeräte 32, 34, 36 und 38 ermittelten Daten verarbeitet und der die Messgeräte 32, 34, 36 und 38 steuert.

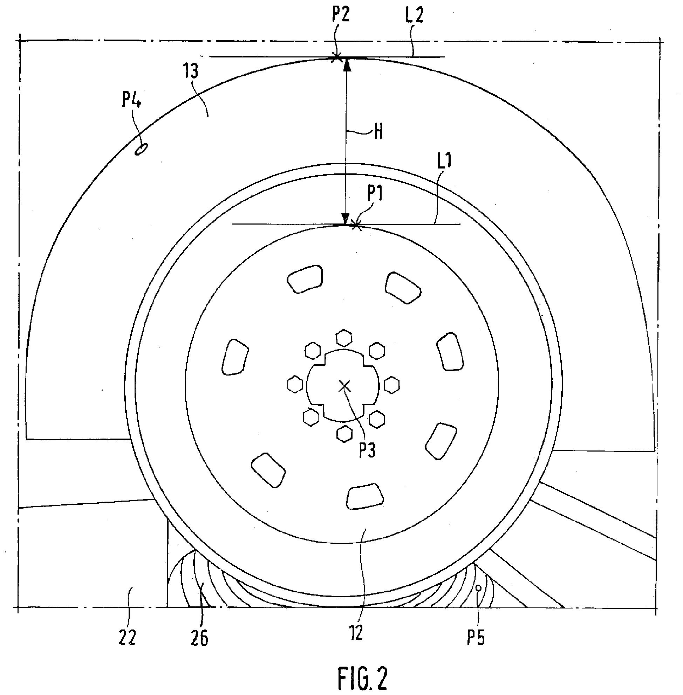

Figur 2 zeigt ein von der ersten Messkamera 42 des ersten Messgeräts 32 aufgenommenes Bild der vorderen linken Radfelge 12 und des vorderen linken Radhauses 13 sowie eines Abschnitts der linken Aufstandsfläche 22 und des vorderen linken Drehtellers 26.

In dem Bild gemäß Figur 2 ist ein erster Raumpunkt P1 zu erkennen, der den obersten Punkt des Felgenhorns darstellt und daher im folgenden als Felgenhornmaximum P1 bezeichnet wird. Des weiteren ist ein Raumpunkt P2 zu erkennen, der den obersten Punkt des Radhauses 13 darstellt und somit als Radhausmaximum P2 bezeichnet wird. Auf der Radachse und im Zentrum der Radfelge 36 ist ein Raumpunkt P3 zu erkennen, der nachfolgend auch als Felgenzentrum P3 bezeichnet wird. Im Radhaus 13 sind weiterhin einige markante Punkte und auch der Stoßdämpfer zu erkennen. Beispielhaft wird aus diesen markanten Punkten ein Raumpunkt P4 als Radhausschraube P4 ausgewählt. Auf dem Drehteller 26 ist ein weiterer Raumpunkt P5 zu erkennen, der eine Bohrung in dem Drehteller 26 darstellt und demzufolge als Drehtellerbohrung P5 bezeichnet wird.

Durch das Felgenhornmaximum P1 ist eine horizontale Hilfslinie zu erkennen, die eine Tangente an das Felgenhorn durch das Felgenhornmaximum P1 darstellt. Diese Hilfslinie wird als Felgenhornhilfslinie L1 bezeichnet.

Durch das Radhausmaximum P2 verläuft eine waagerechte Hilfslinie, die eine Tangente zu dem Kreisbogenabschnitt des Radhauses 13 durch das Radhausmaximum P2 darstellt. Diese Linie wird demzufolge als Radhaushilfslinie L2 bezeichnet.

Der Höhenstand H, der bei dem vorliegenden Kraftfahrzeug 10 durch den vertikalen Abstand zwischen dem Felgenhornmaximum P1 und dem Radhausmaximum P2 definiert ist, ist in Figur 2 schematisch durch einen Doppelpfeil zwischen der Felgenhornhilfslinie L1 und der Radhaushilfslinie L2 dargestellt.

Nachfolgend wird der Ablauf des erfindungsgemäßen Verfahrens zum Bestimmen des Höhenstandes des Kraftfahrzeugs 10 erläutert.

Zu Beginn wird das Kraftfahrzeug 10 wie in Figur 1 gezeigt auf dem Messplatz 20 positioniert. Dann werden die fahrzeug- und messplatzspezifischen Daten aus einer oder mehreren geeigneten Datenbanken bereitgestellt. Wenn interaktiv gemessen wird, müssen die messplatzspezifischen Daten nicht zwangsläufig als Datenbank hinterlegt sein, sondern können auch während der Messung erkannt oder aufgenommen werden.

Zunächst nehmen die beiden Stereo-Messkameras 42 und 43 des vorderen linken Messgeräts 32 jeweils ein Bild der vorderen linken Radfelge 12, des vorderen linken Radhauses 13, sowie eines Ausschnitts der linken Aufstandsfläche 22 mit dem vorderen linken Drehteller 26 auf.

Das aufgenommene Bild der vorderen Messkamera 42 ist in Figur 2 gut zu erkennen, das aufgenommene Bild der Messkamera 43 ist aus einer gegenüber der vorderen Messkamera 42 um einen Winkel nach hinten versetzten Perspektive aufgenommen und umfasst ebenfalls ein vollständiges Bild der Radfelge 12, des Radhauses 13, sowie eines Abschnitts der linken Aufstandsfläche 22 mit dem vorderen linken Drehteller 26.

Nun werden aufgrund den in der Datenbank gespeicherten Fahrzeug- und Messplatzsolldaten mittels einer geeigneten Bildverarbeitungssoftware in einem in Figur 1 nicht gezeigten Rechner der Fahrwerksvermessungseinrichtung wenigstens zwei Raumpunkte in dem Bild der ersten Messkamera 42 bestimmt, und anschließend werden die korrespondierenden Raumpunkte in dem Bild der zweiten Messkamera 43 bestimmt.

Alternativ dazu kann die Auswahl der Raumpunkte in dem Bild der ersten Messkamera 42 durch einen Benutzer erfolgen, und die korrespondierenden Raumpunkte in dem Bild der zweiten Messkamera 43 können durch den Rechner bestimmt werden. Es ist selbstverständlich ebenfalls möglich, dass die Bestimmung der Raumpunkte in beiden Bildern der beiden Messkameras 42 und 43 interaktiv durch einen Benutzer erfolgt. Hierfür verfügt der Rechner über einen geeigneten Monitor, auf dem die Bilder der beiden Messkameras 42 und 43 zusammen oder nacheinander dargestellt werden können, und über eine geeignete Eingabeeinheit, bspw. eine Maus oder eine Tastatur.

Anschließend kann die exakte Position dieser beiden ausgewählten Raumpunkte im Raum durch Verarbeitung der beiden Bilder der beiden Messkameras 42 und 43 mittels Triangulation bestimmt werden, und aus der ermittelten Position dieser beiden Raumpunkte im Raum kann die Höhendifferenz und damit der Abstand dieser beiden Raumpunkte bestimmt werden.

Dies ist dem Fachmann, dem die Triangulation bekannt ist, aufgrund der hier angegebenen Informationen ohne weiteres möglich.

In den folgenden Messsituationen werden jeweils zwei Raumpunkte ausgewählt und bestimmt, von denen einer auf der Radfelge 12 und der andere auf der Fahrzeugkarosserie angeordnet ist.

In einer ersten, beispielhaften Messsituation wird das Felgenhornmaximum P1 als erster Raumpunkt und das Radhausmaximum P2 als zweiter Raumpunkt ausgewählt. Am Bildschirm des Rechners können zur Unterstützung der Interaktion und zur besseren Benutzerfreundlichkeit die zwei Hilfslinien L1 und L2 gezogen und dargestellt werden. Nach der Auswahl dieser beiden Punkte, kann deren Position und deren Abstand unmittelbar berechnet werden. Per Definition des Kraftfahrzeugs 10, die aus der Datenbank bekannt ist, ist der Abstand zwischen dem Felgenhornmaximum P1 und dem Radhausmaximum P2 zugleich der Höhenstand H, der damit ebenfalls bereits bestimmt ist.

In einer zweiten, beispielhaften Messsituation können das Felgenzentrum P3 und das Radhausmaximum P2 als Raumpunkte ausgewählt, deren Positionenabstand ermittelt oder daraus der Höhenstand H ermittelt werden, zumal der Durchmesser in der Regel aus der Vermessung bekannt ist.

In einer weiteren, beispielhaften Messsituation können das Felgenhornmaximum P1 und die Radhausschraube P4 als Raumpunkte ausgewählt und deren Position und deren Höhendifferenz ermittelt werden. Zumal der Abstand der Radhausschraube P4 zu dem Radhausmaximum P2 aus der Datenbank bekannt ist, kann somit ebenfalls der Höhenstand H ermittelt werden.

In einer weiteren, beispielhaften Messsituation werden als Raumpunkte das Felgenzentrum P3 und die Radhausschraube P4 ausgewählt, und deren Position sowie deren Höhendifferenz berechnet. Da der Durchmesser der Radfelge 12 in der Regel aus der Vermessung sowie der Abstand zwischen der Radhausschraube P4 und dem Radhausmaximum P2 aus der Datenbank bekannt sind, kann somit ebenfalls der Höhenstand H ermittelt werden.

Es ist ebenfalls möglich, jeweils ein Raumpunktpaar zu betrachten, dessen erster Raumpunkt auf der Fahrzeugkarosserie und dessen zweiter Raumpunkt auf dem Messplatz 20 angeordnet ist. Bspw. können als Raumpunkte das Radhausmaximum P2 und die Drehtellerbohrung P5 betrachtet werden, woraus sich, zumal der Durchmesser der Radfelge 12 in der Regel aus der Vermessung bekannt ist, ebenfalls der Höhenstand H bestimmen lässt.

Wenn mehr als zwei Raumpunkte ausgewählt werden, und deren Abstände jeweils paarweise errechnet werden, ergibt sich für den Höhenstand H ein noch genaueres Ergebnis.

Schließlich können die bestimmten Raumpunkte und Abstände einem Geometriemerkmal zugeordnet werden, bspw, kann das Felgenhornmaximum P1 dem Felgenhorntorus zugeordent werden, so dass ein dreidimensionales Modell entsteht. Um die ermittelten Daten und Ergebnisse auswerten und weiterverarbeiten zu können, können die bestimmten Raumpunkte, das oder die ermittelten Geometriemerkmale und das dreidimensionale Modell abgespeichert werden.

In einem weiteren Ausführungsbeispiel kann der erste Raumpunkt das Felgenhorn-Maximum P1 und der zweite Raumpunkt das Felgenzentrum P3 oder das Felgenhorn-Minimum sein. Nach der Auswahl dieser beiden Punkte kann deren Position und deren Abstand unmittelbar berechnet werden, und daraus lässt sich der Felgendurchmesser bestimmen.

### Bezugszeichenliste

- 10: Kraftfahrzeug
- 12, 14, 16, 18: Radfelgen
- 13, 15, 17,19: Radhäuser
- 20: Messplatz
- 22, 24: Aufstandsflächen
- 26, 28: Drehteller
- 32, 34, 36, 38: Messgeräte
- 42, 43; 44, 45; 46, 47; 48, 49: Messkameras
- 52, 54, 56, 58: Bezugssystem-Messköpfe
- 62, 64, 66, 68: verschiebbare Grundplatten
- P1: Felgenhorn-Maximum
- P2: Radhaus-Maximum
- P3: Felgenzentrum
- P4: Radhaus-Schraube
- P5: Drehteller-Bohrung
- L1: Felgenhorn-Hilfslinie
- L2: Radhaus-Hilfslinie
- H: Höhenstand

## Patentansprüche

1. Verfahren zum Bestimmen von Abständen zur Fahrwerksvermessung eines stehenden Kraftfahrzeugs (10), insbesondere zum Bestimmen eines Höhenstands (H) oder eines Felgendurchmessers, umfassend:
a) Aufnehmen jeweils eines Bildes einer Radfelge (12, 14, 16, 18) und wenigstens eines Bereichs benachbart zu der Radfelge (12, 14, 16, 18) durch wenigstens zwei Messkameras (42-49) eines Messgeräts (32, 34, 36, 38);
b) Bestimmen wenigstens eines ersten Raumpunktes in den beiden aufgenommenen Bildern;
c) Bestimmen wenigstens eines zweiten Raumpunktes in den beiden aufgenommenen Bildern; und
d) Bestimmen des Abstands zwischen den wenigstens zwei Raumpunkten;
**dadurch gekennzeichnet, dass** wenigstens einer der in Schritt b) oder c) bestimmten Raumpunkte (P1, P3) auf einer Felgenkante liegt oder das Felgenzentrum ist; und/oder
wenigstens einer der in Schritt b) oder c) bestimmte Raumpunkte (P2, P4) auf einer Radhauskante oder in dem Radhaus liegt; und/oder
einer der in Schritt b) oder c) bestimmten Raumpunkte (P5) auf der Drehplatte (26, 28) einer Fahrwerksvermessungseinrichtung oder einer Kraftfahrzeug-Prüfstraße liegt.

2. Verfahren nach Anspruch 1, wobei einer der in Schritt b) oder c) bestimmte Raumpunkte (P1) auf der Felgenoberkante oder auf der Felgenunterkante liegt.

3. Verfahren nach einem der Ansprüche 1 oder 2, wobei einer der in Schritt b) oder c) bestimmte Raumpunkte (P4) ine Schraube in dem Radhaus (13, 15, 17, 19) ist.

4. Verfahren nach einem der Ansprüche 1 bis 3, wobei an der Radfelge (12, 14, 16, 18) oder an dem Radhaus (13, 15, 17, 19) ein Messtarget angeordnet ist, und wobei der in Schritt b) oder c) bestimmte Raumpunkt auf diesem Messtarget, insbesondere auf einer Unterkante oder einer Oberkante des Messtargets liegt.

5. Verfahren nach Anspruch 4, wobei an der Radfelge (12, 14, 16, 18) oder an dem Radhaus (13, 15, 17, 19) ein weiteres Messtarget angeordnet ist, auf dem, insbesondere auf dessen Unterkante oder Oberkante, der weitere Raumpunkt liegt.

6. Verfahren nach einem der Ansprüche 1 bis 5, wobei der in Schritt b) oder c) bestimmte Raumpunkt (P5) eine Bohrung in einer Drehplatte einer Fahrwerksvermessungseinrichtung oder einer Kraftfahrzeug-Prüfstraße ist.

7. Verfahren nach einem der Ansprüche 1 bis 5, wobei einer der in Schritt b) oder c) bestimmte Raumpunkte auf einer Bühne einer Fahrwerksvermessungseinrichtung oder einer Kraftfahrzeug-Prüfstraße liegt.

8. Verfahren nach Anspruch 1, wobei die in Schritt b) und c) bestimmten Raumpunkte zwei Punkte auf der Felge sind, und wobei aus dem in Schritt d) bestimmten Abstand zwischen den wenigstens zwei Raumpunkten der Felgendurchmesser abgeleitet wird.

9. Verfahren nach Anspruch 8, wobei einer der beiden bestimmten Raumpunkte das Felgenzentrum bildet und der andere bestimmte Raumpunkt auf dem Felgenhorntorus liegt.

10. Verfahren nach Anspruch 8, wobei einer der beiden bestimmten Raumpunkte auf der Felgenoberkante und der andere bestimmte Raumpunkt auf der Felgenunterkante liegt.

11. Verfahren nach einem der Ansprüche 1 bis 10, wobei nach Schritt c) wenigstens ein weiterer Raumpunkt in den beiden aufgenommenen Bildern bestimmt wird, und wobei die Abstände zwischen den bestimmten Raumpunkten ermittelt werden.

12. Verfahren nach einem der Ansprüche 1 bis 11, wobei in wenigstens einem aufgenommenen Bild durch wenigstens einen Raumpunkt, insbesondere durch wenigstens einen auf einer Kante liegenden Raumpunkt eine Hilfslinie (L1, L2), insbesondere eine horizontale oder vertikale Hilfslinie bestimmt wird.

13. Verfahren nach Anspruch 12, wobei die Lage und die Form der Hilfslinie (L1, L2) um den Betrag der Schrägstellung des Messkopfes und um die Verzerrung der Lage der Messkamera (42 - 49) korrigiert werden.

14. Verfahren nach einem der Ansprüche 1 bis 13, wobei wenigstens ein Bild einer Messkamera (42 - 49) auf einem Monitor dargestellt wird.

15. Verfahren nach Anspruch 14, wobei die Auswahl wenigstens eines Raumpunktes in Schritt b) oder c) in einem aufgenommenen Bild einer Messkamera (42; 44; 46; 48) von einem Benutzer über ein Anzeigegerät, insbesondere über einen Monitor, und über ein Eingabegerät, insbesondere über eine Maus oder eine Tastatur erfolgt.

16. Verfahren nach Anspruch 15, wobei der gleiche Raumpunkt in dem Bild der anderen Messkamera (43; 45; 47; 49) ebenfalls von einem Benutzer bestimmt wird.

17. Verfahren nach Anspruch 15, wobei der gleiche Raumpunkt in dem Bild der anderen Messkamera (43; 45; 47; 49) durch einen Rechner einer Fahrwerksvermessungseinrichtung oder einer Kraftfahrzeug-Prüfstraße bestimmt wird.

18. Verfahren nach einem der Ansprüche 1 bis 14, wobei die Auswahl wenigstens eines Raumpunktes in Schritt b) oder c) in wenigstens einem aufgenommenen Bild einer Messkamera (42 - 49) durch einen Rechner einer Fahrwerksvermessungseinrichtung oder einer Kraftfahrzeug-Prüfstraße erfolgt, und zwar anhand von in einer Fahrzeugdatenbank gespeicherten Fahrzeugsolldaten und/oder anhand von messplatzspezifischen Daten.

19. Verfahren nach einem der Ansprüche 1 bis 18, wobei die bestimmten Raumpunkte einem Geometrie-Merkmal zugeordnet werden, sodass ein dreidimensionales Modell entsteht.

20. Verfahren nach einem der Ansprüche 1 bis 19, wobei die bestimmten Raumpunkte und/oder das ermittelte Geometrie-Merkmal und/oder das dreidimensionale Modell abgespeichert wird/werden.

## Claims

1. A method for determining distances for wheel alignment measurement of a stationary motor vehicle (10), in particular for determining a height level (H) or a rim diameter, comprising:
a) capturing a respective image of a wheel rim (12, 14, 16, 18) and at least an area adjacent the wheel rim (12, 14, 16, 18) by at least two measuring cameras (42 - 49) of a measuring device (32, 34, 36, 38);
b) determining at least one first spatial point in the two captured images;
c) determining at least one second spatial point in the two captured images; and
d) determining the distance between the at least two spatial points,
**characterized in**
**that** at least one of the spatial points determined in step b) or c) is located on a rim edge or is the rim centre; and/or
**that** at least one of the spatial points (P2, P4) determined in step b) or c) is located on a wheelhouse edge or in the wheelhouse; and/or
**that** one of the spatial points (P5) determined in step b) or c) is located on the rotary plate (26, 28) of a wheel alignment measuring device or a motor vehicle test track.

2. The method according to claim 1,
wherein one of the spatial points (P1) determined in step b) or c) is located on the rim upper edge or on the rim lower edge.

3. The method according to any of claims 1 and 2,
wherein one of the spatial points (P4) determined in step b) or c) is a screw in the wheelhouse (13, 15, 17, 19).

4. The method according to any of claims 1 to 3,
wherein the wheel rim (12, 14, 16, 18) or the wheelhouse (13, 15, 17, 19) has a measurement target arranged thereon, and wherein the spatial point determined in step b) or c) is located on this measurement target, in particular on a lower edge or an upper edge of the measurement target.

5. The method according to claim 4,
wherein the wheel rim (12, 14, 16, 18) or the wheelhouse (13, 15, 17, 19) has a further measurement target arranged thereon, on which, in particular on the lower edge or the upper edge thereof, the further spatial point is located.

6. The method according to any of claims 1 to 5,
wherein the spatial point (P5) determined in step b) or c) is a bore in a rotary plate of a wheel alignment measuring device or a motor vehicle test track.

7. The method according to any of claims 1 to 5,
wherein one of the spatial points determined in step b) or c) is located on a stage of a wheel alignment measuring device or a motor vehicle test track.

8. The method according to claim 1,
wherein the spatial points determined in step b) and c) are two points on the rim, and wherein the rim diameter is derived from the distance between the at least two spatial points determined in step d).

9. The method according to claim 8,
wherein one of the two spatial points determined constitutes the rim centre and the other spatial point determined is located on the rim flange torus.

10. The method according to claim 8,
wherein one of the two spatial points determined is located on the rim upper edge and the other spatial point determined is located on the rim lower edge.

11. The method according to any of claims 1 to 10,
wherein after step c), at least one further spatial point in the two captured images is determined, and wherein the distances between the spatial points determined are ascertained.

12. The method according to any of claims 1 to 11,
wherein an auxiliary line (L1, L2), in particular a horizontal or vertical auxiliary line, is determined in at least one captured image by at least one spatial point, in particular by at least one spatial point located on an edge.

13. A method according to claim 12,
wherein the position and the shape of the auxiliary line (L1, L2) are corrected by the amount of inclination of the measuring head and by the distortion of the position of the measuring camera (42 - 49).

14. A method according to any of claims 1 to 13,
wherein at least one image of a measuring camera (42 - 49) is displayed on a monitor.

15. A method according to claim 14,
wherein the selection of at least one spatial point in step b) or c) in a captured image of a measuring camera (42; 44; 46; 48) by a user takes place via a display device, in particular via a monitor, and via an input device, in particular via a mouse or a keyboard.

16. A method according to claim 15,
wherein the same spatial point in the image of the other measuring camera (43; 45; 47; 49) is also determined by a user.

17. A method according to claim 15,
wherein the same spatial point in the image of the other measuring camera (43; 45; 47; 49) is determined by a computer of a wheel alignment measuring device or a motor vehicle test track.

18. A method according to any of claims 1 to 14,
wherein the selection of at least one spatial point in step b) or c) in at least one captured image of a measuring camera (42 - 49) takes place by a computer of a wheel alignment measuring device or a motor vehicle test track, namely by way of vehicle target data stored in a vehicle database and/or by way of measurement-site-specific data.

19. A method according to any of claims 1 to 18,
wherein the spatial points determined are allocated to a geometry feature so that a three-dimensional model is created.

20. The method according to any of claims 1 to 19,
wherein the spatial points determined and/or the geometry feature ascertained and/or the three-dimensional model is/are stored.

## Revendications

1. Procédé pour la détermination des distances en vue de la mesure du train de roulement d'un véhicule automobile (10) à l'arrêt, en particulier pour la détermination d'une position en hauteur (H) ou d'un diamètre de jante, comprenant :
a) la capture d'une image de chaque jante de roue (12, 14, 16, 18) et d'au moins une zone voisine de la jante de roue (12, 14, 16, 18) par au moins deux caméras de mesure (42 - 49) d'un instrument de mesure (32, 34, 36, 38) ;
b) la détermination d'au moins un premier point de l'espace dans les deux images capturées ;
c) la détermination d'au moins un deuxième point de l'espace dans les deux images capturées ; et
d) la détermination de la distance entre les deux points de l'espace au moins ;
**caractérisé en ce que**
au moins un des points de l'espace (P1, P3) déterminés à l'étape b) ou c) est situé sur une arête de jante ou est le centre de la jante ; et/ou
au moins un des points de l'espace (P2, P4) déterminés à l'étape b) ou c) est situé sur une arête du passage de roue ou dans le passage de roue ; et/ou
un des points de l'espace (P5) déterminés à l'étape b) ou c) est situé sur le plateau rotatif (26, 28) d'un dispositif de contrôle de la géométrie d'un châssis ou d'une ligne de test de véhicules automobiles.

2. Procédé selon la revendication 1, dans lequel un des points de l'espace (P1) déterminés à l'étape b) ou c) est situé sur l'arête supérieure ou sur l'arête inférieure de la jante.

3. Procédé selon l'une quelconque des revendications 1 ou 2, dans lequel un des points de l'espace (P4) déterminés à l'étape b) ou c) est une vis dans le passage de roue (13, 15, 17, 19).

4. Procédé selon l'une quelconque des revendications 1 à 3, dans lequel une cible de mesure est disposée sur la jante de roue (12, 14, 16, 18) ou sur le passage de roue (13, 15, 17, 19), et où le point de l'espace déterminé à l'étape b) ou c) est situé sur cette cible de mesure, en particulier sur une arête supérieure ou une arête inférieure de la cible de mesure.

5. Procédé selon la revendication 4, dans lequel une autre cible de mesure est disposée sur la jante de roue (12, 14, 16, 18) ou sur le passage de roue (13, 15, 17, 19), sur laquelle, en particulier sur l'arête inférieure ou supérieure de laquelle se trouve l'autre point de l'espace.

6. Procédé selon l'une quelconque des revendications 1 à 5, dans lequel le point de l'espace (P5) déterminé à l'étape b) ou c) est un trou dans le plateau rotatif d'un dispositif de contrôle de la géométrie ou d'une ligne de test de véhicules automobiles.

7. Procédé selon l'une quelconque des revendications 1 à 5, dans lequel un des points de l'espace déterminés à l'étape b) ou c) est situé sur la plateforme d'un dispositif de contrôle de la géométrie ou d'une ligne de test de véhicules automobiles.

8. Procédé selon la revendication 1, dans lequel les points de l'espace déterminés aux étapes b) et c) sont deux points sur la jante, et où la distance déterminée à l'étape d) entre les deux points de l'espace au moins permet de déduire le diamètre de la jante.

9. Procédé selon la revendication 8, dans lequel un des deux points de l'espace déterminés constitue le centre de la jante et où l'autre point de l'espace déterminé est situé sur le tore du rebord de la jante.

10. Procédé selon la revendication 8, dans lequel un des deux points de l'espace déterminés est situé sur l'arête supérieure de la jante et où l'autre point de l'espace déterminé est situé sur l'arête inférieure.

11. Procédé selon l'une quelconque des revendications 1 à 10, dans lequel, après l'étape c), au moins un autre point de l'espace est déterminé dans les deux images capturées, et où les distances entre les points de l'espace déterminés sont calculées.

12. Procédé selon l'une quelconque des revendications 1 à 11, dans lequel, dans au moins une des images capturées, une ligne auxiliaire (L1, L2), en particulier une ligne auxiliaire horizontale ou verticale, est déterminée, passant par au moins un point de l'espace, en particulier par au moins un point de l'espace situé sur une arête.

13. Procédé selon la revendication 12, dans lequel la position et la forme de la ligne auxiliaire (L1, L2) sont corrigées de la valeur d'inclinaison de la tête de mesure et de la distorsion de la position de la caméra de mesure (42 - 49).

14. Procédé selon l'une quelconque des revendications 1 à 13, dans lequel au moins une image d'une caméra de mesure (42 - 49) est représentée sur un moniteur.

15. Procédé selon la revendication 14, dans lequel la sélection d'au moins un point de l'espace à l'étape b) ou c) dans une image capturée par une caméra de mesure (42 ; 44 ; 46 ; 48) se fait par un utilisateur via un appareil d'affichage, en particulier via un moniteur, et via un appareil de saisie, en particulier via une souris ou un clavier.

16. Procédé selon la revendication 15, dans lequel le même point de l'espace dans l'image de l'autre caméra de mesure (43 ; 45 ; 47 ; 49) est également déterminé par un utilisateur.

17. Procédé selon la revendication 15, dans lequel le même point de l'espace dans l'image de l'autre caméra de mesure (43 ; 45 ; 47 ; 49) est déterminé par un ordinateur d'un dispositif de contrôle de la géométrie ou d'une ligne de test de véhicules automobiles.

18. Procédé selon l'une quelconque des revendications 1 à 14, dans lequel la sélection d'au moins un point de l'espace à l'étape b) ou c) dans au moins une image capturée par une caméra de mesure (42 - 49) se fait par un ordinateur d'un dispositif de contrôle de la géométrie ou d'une ligne de test de véhicules automobiles, sur la base de données de consigne du véhicule enregistrées dans une base de données de véhicules et/ou sur la base de données spécifiques au poste de mesure.

19. Procédé selon l'une quelconque des revendications 1 à 18, dans lequel les points de l'espace déterminés sont associés à une caractéristique géométrique, créant ainsi un modèle tridimensionnel.

20. Procédé selon l'une quelconque des revendications 1 à 19, dans lequel les points de l'espace déterminés et/ou la caractéristique géométrique identifiée et/ou le modèle tridimensionnel est/sont enregistré(s).
